# EUROPÄISCHE PATENTSCHRIFT

(11) **EP 0 981 813 B1**
(45) Veröffentlichungstag und Bekanntmachung des Hinweises auf die Patenterteilung: **11.09.2002**
(21) Anmeldenummer: 98930679.0
(22) Anmeldetag: 11.05.1998
(51) Int. Cl.: G09G 3/28

(54) **VERFAHREN UND VORRICHTUNG ZUR KONTRASTEINSTELLUNG BEI UNTERRAHMENGESTEUERTEN BILDANZEIGEN**
METHOD AND DEVICE FOR CONTRAST CONTROL IN SUBFRAME-CONTROLLED PICTURE DISPLAYS
PROCEDE ET DISPOSITIF DE REGLAGE DU CONTRASTE DANS DES DISPOSITIFS D'AFFICHAGE D'IMAGE COMMANDES PAR SOUS-TRAMES

(30) Priorität: 17.05.1997 DE 19720876
(43) Veröffentlichungstag der Anmeldung: 01.03.2000
(73) Patentinhaber: GRUNDIG Aktiengesellschaft, 90471 Nürnberg (DE)
(72) Erfinder: KÖCHEL, Matthias, D-90419 Nürnberg (DE)
(74) Vertreter: Pröll, Jürgen
(86) Internationale Anmeldenummer: EP9802731
(87) Internationale Veröffentlichungsnummer: WO98053442

(56) Entgegenhaltungen:
- EP-A- 0 653 740
- PATENT ABSTRACTS OF JAPAN vol. 18, no. 659 (P-1843), 13. Dezember 1994 & JP 06 259034 A (FUJITSU GENERAL LTD.), 16. September 1994
- B. MERCIER ET AL: "A NEW VIDEO STORAGE ARCHITECTURE FOR PLASMA DISPLAY PANELS " DIGEST OF TECHNICAL PAPERS, INTERNATIONAL CONFERENCE ON CONSUMER ELECTRONICS, 7-9 JUIN 1995, PAGES 198,199 ROSEMONT US, XP000547785

## Beschreibung

Die Erfindung betrifft ein Verfahren und eine Vorrichtung zur Kontrasteinstellung bei impulsbreitengesteuerten Bildanzeigen.

Die meisten bekannten Anzeigevorrichtungen wie Bildröhren oder LCDs weisen einen analogen Zusammenhang zwischen einer Eingangsgröße, z. B. der Eingangsspannung, und der Ausgangsgröße, d. h. der Leuchtdichte auf der Displayoberseite auf. Die Leuchtdichte kann daher einfach mittels einer Variation der Eingangsgröße mehr oder weniger stufenlos verändert werden.

Neuere Typen von Anzeigevorrichtungen können einen digitalen Zusammenhang zwischen der Eingangsgröße und der Leuchtdichte aufweisen. Sie können nur zwei Zustände - eingeschaltet und ausgeschaltet - einnehmen. Um hier dennoch eine große Palette von Zwischengraustufen erzielen zu können, kann die Bilddarstellung durch ein digitales Zeitmultiplexverfahren durchgeführt werden.

Dazu wird ein Bild zeitlich in mehrere Teilzeitintervalle zerlegt, während derer in Abhängigkeit vom jeweils gewünschten Helligkeitswert eine vorgegebene Anzahl von Spannungsimpulsen zur Displayansteuerung erzeugt wird. Durch die Trägheit des menschlichen Auges erscheinen dann nicht mehr einzelne Bildwechsel, sondern es entsteht ein Grauwert, der von der Anzahl der erzeugten Spannungsimpulse abhängt. Ist die Anzahl der in den Teilzeitintervallen erzeugbaren Spannungsimpulse gewichtet, dann können mit wenigen Teilzeitintervallen viele Graustufen dargestellt werden. Bei einer binären Gewichtung (1,2,4,8...) können 2 potenziert mit der Anzahl der Teilzeitintervalle Graustufen dargestellt werden. Um möglichst viele Graustufen darstellen zu können, ist es wünschenswert, möglichst viele Teilzeitintervalle zu verwenden. Allerdings ist auf Grund technologischer Randbedingungen die Anzahl der Teilzeitintervalle beschränkt.

Dies führt dazu, daß bei derartigen Displays die Anzahl der Graustufen beschränkt ist, was sich insbesondere in kritischen Bildpartien wie beispielsweise Gesichtern oder dunklen Bereichen negativ auswirkt.

Die elektrische Architektur eines derartigen Anzeigengerätes sieht im allgemeinen so aus, daß ein analoges Eingangssignal mittels eines Wandlers in ein digitales Signal umgesetzt wird, und dann durch eine Zuordnung in den einzelnen Teilzeitintervallen Spannungsimpulse erzeugt oder nicht erzeugt werden. Im Falle einer binären Gewichtung sieht diese Zuordnung so aus, daß dem digital höchstgewichteten Bit das längste Teilbild zugewiesen wird, dem zweithöchstgewichteten das zweitlängste, usw..

Ein Fernsehempfänger weist standardmäßig eine Kontrasteinstellmöglichkeit auf. Wird zum Beispiel der Kontrast um den Faktor zwei reduziert, dann ist die Eingangsgröße für den oben genannten A/D-Wandler ebenfalls um den Faktor zwei reduziert und es kann nur noch die Hälfte der ursprünglich vorhandenen Graustufen dargestellt werden.

Die oben erwähnten Nachteile kommen dann noch deutlicher zum Ausdruck bzw. werden durch dynamische Effekte ( Durchwandern bei kontinuierlicher Kontraständerung) hervorgehoben.

Aus der Zeitschrift Funkschau, 1996, Heft 19, Seite 38-41, ist eine Bildanzeige in Form eines Plasma-Displays bekannt. Bei einem derartigen Display wird als Leuchtmittel Phosphor verwendet, welches durch eine Gasentladung, also Plasma, zum Leuchten angeregt wird. Plasma entsteht, indem man Gas Energie zuführt. Bei den Plasma-Displays macht man sich den Umstand zunutze, daß Plasma hochfrequentes Licht im ultravioletten Bereich aussendet, was wiederum spezielles Phosphor zum Leuchten bringt. Dabei wird pro Bildpunkt des Displays für jede Farbe eine eigene Zelle benötigt, die separat unter Spannung gesetzt werden kann. Die Zellen sind mit Edelgas gefüllt, einer Mischung aus Neon, Xenon und Helium. Diese Mischung läßt sich problemlos und ohne Veränderungen zwischen gas- und plasmaförmigen Zustand hin- und herwandeln. Zur Erzeugung eines gewünschten Helligkeitswertes muß die Höhe der Spannung pro Bildpunkt, wodurch sonst die Helligkeit definiert ist, in einen Zeitwert, d. h. in ein impulsbreitengesteuertes Signal umgewandelt werden. Liegt diese Spannung nur ganz kurz an, leuchtet das Phosphor schwach auf, bei maximaler Dauer des Stromstoßes wird die größtmögliche Helligkeit erreicht.

Aus der Zeitschrift Radio Fernsehen Elektronik RFE, Heft 2, 1997, Seiten 18-20 ist ein Plasmadisplay bekannt, das aus zwei Glasplatten mit matrixartig angeordneten Elektroden besteht, zwischen denen sich ein Edelgasgemisch befindet. Übersteigt die Spannung an einem Kreuzungspunkt dieser Elektroden einen bestimmten Wert, der Zündspannung, so wird dort das Gas ionisiert, und - vereinfacht ausgedrückt - das sogenannte Plasma entsteht. Dieses Plasma sendet UV-Licht aus, welches wiederum Leuchtstoffe anregt, die Rot, Grün und Blau emittieren. Jeder Kreuzungspunkt der Elektroden entspricht einem Bildpunkt. Zur Vermeidung des Übersprechens des Plasmas und des UV-Lichts sind die Bildpunkte voneinander durch ca. 100 um hohe Barrieren getrennt. Diese Barrieren sind gleichzeitig die Abstandshalter für die beiden Glasplatten. Alle Elektroden sind über Folienkontakte mit Ansteuerungs-IC's verbunden, die sich auf einer Leiterplatte auf der Rückseite des Plasmadisplays befinden.

Ein Bildpunkt kann sich nur in einem leuchtenden oder dunklen Zustand befinden. Zur Erzeugung der benötigten Zwischen- oder Graustufen wird daher eine Pulsbreitenmodulation benutzt. Die Dauer, in der sich der Bildpunkt im leuchtenden Zustand befindet, ist das Maß für die vom Auge empfundene Helligkeit. Aufgrund der Matrixstruktur des Bildschirms können die Bildpunkte allerdings nicht zu beliebigen Zeitpunkten einzeln ein- und ausgeschaltet werden, sondern nur zeilenweise. Daher wurde ein besonderes Verfahren, die sogenannte "Subfield-Adressierung", entwickelt. Hier wird die Dauer eines Fernsehbildes in eine Reihe von Teilbildern zerlegt, die nacheinander dargestellt werden und im folgenden auch als Teilzeitintervalle bezeichnet werden. Nimmt man zum Beispiel acht Teilbilder, deren zeitliche Dauer binär gewichtet ist, so können 2 hoch 8 = 256 Graustufen erzeugt werden.

Jedes Teilzeitintervall gliedert sich in zwei Phasen. In der ersten Adressierungsphase werden zunächst die Bildpunkte mit den senkrecht zueinander stehenden Elektroden in eine definierte Ausgangssituation gebracht. Es wird ein kurzer Adressierungsimpuls angelegt und je nach dem, ob die Zündspannung überschritten ist oder nicht, wird der Bildpunkt in einen vorgespannten oder neutralen Zustand versetzt. Dieser Zustand wird im Bildpunkt in Form einer geringen Oberflächenflächenladung gespeichert, die sich auf einer über den Elektroden angebrachten Isolationsschicht hält. So werden alle Zeilen des Displays nacheinander adressiert. Die Dauer dieser Phase errechnet sich aus der Dauer des Adressierungsimpulses und der Anzahl der Zeilen und liegt im Millisekundenbereich. Danach schließt sich die Leuchtphase an. Über die parallel verlaufenden Y-Elektroden wird an alle Bildpunkte gleichzeitig eine Spannung pulsartig angelegt. Diese Spannungsimpulse werden im folgenden auch als Sustainerspannungsimpluse oder als Sustainerspannung bezeichnet werden. Der Wert dieser Spannung ist so hoch, daß alle vorher vorgespannten Bildpunkte ins Leuchten versetzt werden, während alle neutralen Bildpunkte dunkel bleiben. Nach dem Spannungspuls wird die Polarität der Sustainerspannung invertiert, daher erklärt sich auch der Name "AC-Plasma". Die Dauer der Leuchtphase hängt von der Anzahl der Sustainerimpulse ab, die sich aus der Gewichtung des Teilbildes ergibt, und kann einige Mikro- bis Millisekunden betragen. Danach werden alle Bildpunkte wieder mit einem Löschimpuls in den neutralen Zustand zurückversetzt, und das nächste Subfield kann sich anschließen.

Das impulsbreitengesteuerte Signal wird oft in Form einer von der gewünschten Dauer des Stromstoßes abhängigen Anzahl von Spannungsimpulsen zur Verfügung gestellt. Aufgrund der Matrixstruktur des Bildschirms können die Bildpunkte nicht zu beliebigen Zeiten einzeln ein- und ausgeschaltet werden, sondern nur zeilenweise zu vorgegebenen Teilzeitintervallen, wie bereits oben erläutert wurde. Es erfolgt vorzugsweise eine zeilensprungfreie Wiedergabe, wobei für ein Vollbild ein Zeitintervall von beispielsweise 20 ms zur Verfügung steht.

Ausgehend von diesem Stand der Technik liegt der Erfindung die Aufgabe zugrunde, einen Weg aufzuzeigen, wie bei impulsbreitengesteuerten Bildanzeigen eine Kontraständerung ohne eine merkliche Reduzierung der Anzahl der Graustufen erfolgen kann, wobei darüber hinaus durch zusätzliche Verwendung der analoger Kontrasteinstellmittel eine Kontrastfeineinstellung möglich ist.

Diese Aufgabe wird durch ein Verfahren mit den in Anspruch 1 angegebenen Merkmalen und einer Vorrichtung mit den in Anspruch 2 angegebenen Merkmalen gelöst.

Die Vorteile der Erfindung bestehen insbesondere darin, daß im Unterschied zum vorbekannten Verfahren bei einer Kontrastreduzierung keine (merkliche) Reduktion der Anzahl der darstellbaren Graustufen erfolgt, da trotz der vorgenommenen Kontrastreduzierung der gesamte Arbeitsbereich des Analog-Digital-Wandlers ausgenutzt werden kann.

Der Aufwand zur Realisierung der Erfindung ist außerordentlich gering, da in vielen dieser impulsbreitengesteuerten Anzeigevorrichtungen ohnehin bereits Mittel zu einer Änderung der Anzahl der Impulse vorhanden sind, um eine Anpassung der Anzeigevorrichtung im Hinblick auf unterschiedliche Bildwechselfrequenzen (5DHz oder 60Hz) oder um für eine vom jeweiligen Bildinhalt unabhängige gleichmäßige Leistungsaufnahme des Displays zu sorgen. Diese ohnehin vorhandenen Mittel zur Anpassung der Anzahl der Impulse kann in vorteilhafter Weise zur Kontrasteinstellung mitverwendet werden.

Weitere vorteilhafte Eigenschaften der Erfindung ergeben sich aus der Erläuterung der Erfindung anhand der Figuren.

Es zeigen:
- Fig. 1: ein Blockschaltbild einer Vorrichtung zur Erläuterung eines bekannten Verfahrens zur Kontrasteinstellung bei impulsbreitengesteuerten Bildanzeigen,
- Fig. 2: ein Blockschaltbild einer Vorrichtung zur Erläuterung eines weiteren Verfahrens zur Kontrasteinstellung bei impulsbreitengesteuerten Bildanzeigen,
- Fig. 3: ein Blockschaltbild eines Ausführungsbeispiels für die Erfindung und
- Fig. 4: ein Blockschaltbild eines Ausführungsbeispiels für die Erfindung.

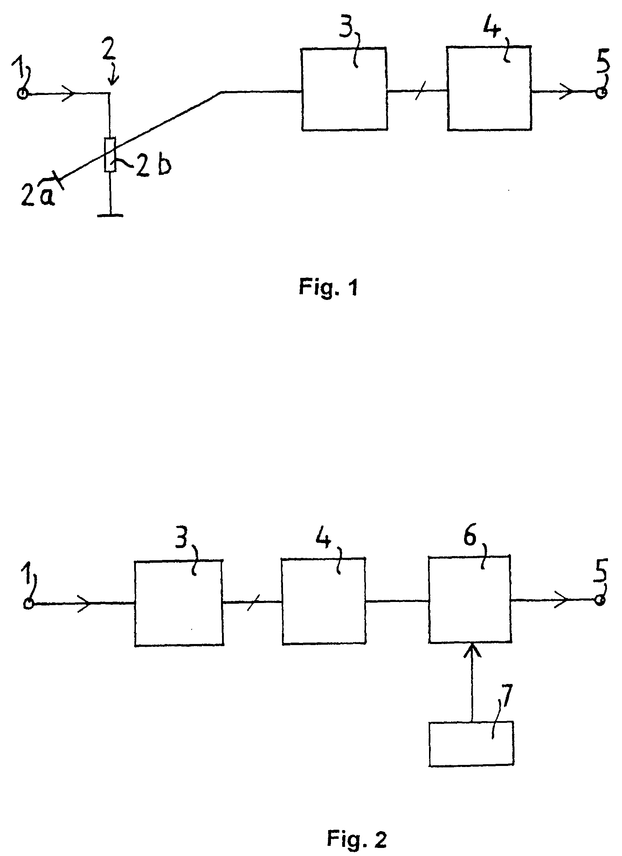

Die Figur 1 zeigt ein Blockschaltbild einer Vorrichtung zur Erläuterung eines bekannten Verfahrens zur Kontrasteinstellung bei impulsbreitengesteuerten Bildanzeigen. Dem Eingangsanschluß 1 der gezeigten Vorrichtung wird ein analoges Bildsignal zugeführt. Dieses wird einer ein veränderbares Widerstandsnetzwerk 2b aufweisenden Kontraststeuerschaltung 2 zugeführt. Die Kontrasteinstellung erfolgt mittels eines Kontrasteinstellelementes 2a durch den Benutzer. Das Ausgangssignal der Kontraststeuerschaltung 2 wird in einem Analog-Digital-Wandler 3 in ein digitales Signal umgesetzt. Aus diesem digitalen Signal wird in einer Schaltung 4 eine vom digitalen Signalwert abhängige Anzahl Spannungsimpulse erzeugt, die als Ansteuersignale für ein Plasma-Display an einem Ausgangsanschluß 5 zur Verfügung gestellt werden.

Für die Erzeugung dieser Spannungsimpulse stehen in jedem Vollbild, welches eine Dauer von beispielsweise 20 ms hat, beispielsweise acht Teilzeitintervalle zur Verfügung. Je nach gewünschtem Helligkeitswert erfolgt in einem oder mehreren dieser acht Teilzeitintervalle eine Ansteuerung des Displays mit Spannungsimpulsen. Durch die Trägheit des menschlichen Auges erscheinen dann nicht mehr die einzelnen Teilbilder, sondern es entsteht ein Grauwert, der davon abhängig ist, in welchen der Teilzeitintervalle Spannungsimpulse erzeugt werden und in welchen nicht. Ist die Anzahl der Spannungsimpulse binär gewichtet, so können bei Vorliegen von acht Teilzeitintervallen 2⁸ Graustufen dargestellt werden.

Die Anzahl der Spannungsimpulse im ersten Teilzeitintervall beträgt beispielsweise 10, die Anzahl der Spannungsimpulse im zweiten Teilzeitintervall 20, die Anzahl der Spannungsimpulse im dritten Teilzeitintervall 40, usw..

Wird bei der in der Figur 1 dargestellten Vorrichtung mittels des Kontrasteinstellelementes 2a eine Kontrastreduzierung um den Faktor 2 vorgenommen, dann ist die Eingangsgröße für den Analog-Digital-Wandler 3 ebenfalls um den Faktor 2 reduziert und es kann nur die Hälfte der ursprünglich vorhandenen Graustufen dargestellt werden.

In der Figur 2 ist ein Blockschaltbild einer Vorrichtung zur Erläuterung eines weiteren Verfahrens zur Kontrasteinstellung bei impulsbreitengesteuerten Displays gezeigt, bei welchen keine derartige Reduzierung der darstellbaren Graustufen erfolgt.

Entsprechende Verfahren und Vorrichtungen sind aus EP 0 653 740 bekannt.

Dem Eingangsanschluß 1 der gezeigten Vorrichtung wird ein analoges Bildsignal zugeführt. Dieses wird in einem Analog-Digital-Wandler 3 in ein digitales Signal umgesetzt. Aus diesem digitalen Signal wird in einer Schaltung 4 eine vom digitalen Signalwert abhängige Anzahl digitaler Spannungsimpulse erzeugt.

Für die Erzeugung dieser Spannungsimpulse stehen in jedem Vollbild, welches eine Dauer von 20 ms hat. acht Teilzeitintervalle zur Verfügung. Die in jedem dieser Teilzeitintervalle erzeugbare Anzahl von Spannungsimpulsen ist ebenso wie bei der bekannten Anzeigeansteuerung binär gewichtet, so daß auch hier insgesamt 2⁸ Graustufen darstellbar sind. Der dargestellte Helligkeitswert ist davon abhängig, in welchen der Teilzeitintervallen jeweils Spannungsimpulse erzeugt werden und in welchen nicht. Werden beispielsweise in allen Teilzeitintervallen Spannungsimpulse erzeugt, dann wird der jeweils adressierte Bildpunkt in der größtmöglichen Helligkeit dargestellt.

Eine Kontrasteinstellung erfolgt nun dadurch, daß in Reaktion auf eine Betätigung des Kontrasteinstellelementes 7 mittels der Kontraststeuerschaltung 6, bei der es sich um einen Mikrocomputer handelt, die Anzahl der in jedem Teilzeitintervall erzeugbaren Spannungsimpulse verändert wird. Beispielsweise erfolgt in einer ersten Kontrastreduktionsstufe eine Reduzierung der im ersten Teilzeitintervall erzeugbaren Spannungsimpulse von 10 auf 9, der im zweiten Teilzeitintervall erzeugbaren Spannungsimpulse von 20 auf 18, der im dritten Teilzeitintervall erzeugbaren Spannungsimpulse von 40 auf 36, usw..

In einer zweiten Kontrastreduktionsstufe erfolgt eine Reduzierung der im ersten Teilzeitintervall erzeugbaren Spannungsimpulse auf 8, der im zweiten Teilzeitintervall erzeugbaren Spannungsimpulse auf 16, der im dritten Teilzeitintervall erzeugbaren Spannungsimpulse auf 32, usw..

Auf diese Weise wird trotz der vorgenommenen Kontrastreduzierung der gesamte Arbeitsbereich des Analog-Digital-Wandlers 3 voll ausgenutzt und es findet keine Reduktion der Anzahl der darstellbaren Graustufen statt.

Da in Plasma-Displays in vielen Fällen bereits Mittel für eine Anpassung der Anzahl der in jedem Teilzeitintervall erzeugbaren Anzahl von Spannungsimpuisen vorgesehen sind, um eine Anpassung des Displays an unterschiedliche Bildwechselfrequenzen, beispielsweise 50 Hz und 60 Hz, zu ermöglichen oder um eine vom jeweils vorliegenden Bildinhalt unabhängige Leistungsaufnahme des Displays zu erreichen, können diese ohnehin vorhandene Mittel in vorteilhafter Weise zu einer Einstellung des Kontrastes im vorstehend beschriebenen Sinne mitverwendet werden.

Das Ansteuersignal, welches gemäß der Erfindung eine veränderte Anzahl von Spannungsimpulsen in den Teilzeitintervallen aufweist, wird am Ausgangsanschluß 5 der in Figur 2 gezeigten Vorrichtung zur Verfügung gestellt.

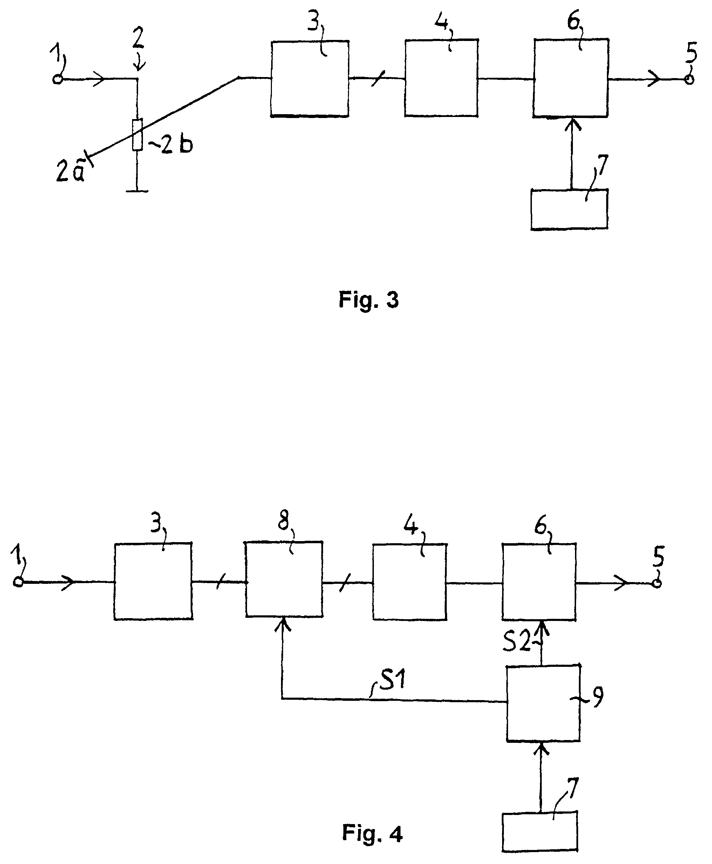

Die Figur 3 zeigt ein Blockschaltbild eines Ausführungsbeispiels für die Erfindung. Bei diesem Ausführungsbeispiel sind Kontrasteinstellelemente 2a und 7 vorgesehen. Mittels des Kontrasteinstellelementes 7 erfolgt eine Grobeinstellung des Kontrastes, bei welcher - wie es bereits oben im Zusammenhang mit der Figur 2 beschrieben wurde - die mit dem Kontrasteinstellelement 7 verbundene Kontraststeuerschaltung 6 die Anzahl der in jedem Teilzeitintervall erzeugbaren Spannungsimpulse verändert. Mittels des Kontrasteinstellelementes 2a erfolgt eine Feineinstellung des Kontrastes, zu welcher - wie es bereits oben im Zusammenhang mit der Figur 1 beschrieben wurde - unter Verwendung eines Widerstandselementes 2b eine analoge Kontrasteinstellung erfolgt. Bei diesem Ausführungsbeispiel ist der Kontrasteinstellbereich für die analoge Kontrasteinstellung im Vergleich zu der in Figur 1 beschriebenen analogen Kontrasteinstellung reduziert. Die Vorteile dieses Ausführungsbeispiels bestehen insbesondere darin, daß fast der gesamte Arbeitsbereich des Analog-Digital-Wandlers 3 ausgenutzt werden kann, wobei darüber hinaus durch zusätzliche Verwendung der analogen Kontrasteinstellmittel eine Kontrastfeineinstellung möglich ist.

Die Figur 4 zeigt ein Blockschaltbild eines weiteren Ausführungsbeispiels für die Erfindung. Bei diesem Ausführungsbeispiel erfolgt ebenfalls eine Grobeinstellung und eine Feineinstellung des Kontrastes. Zu diesem Zweck ist das einzige Kontrasteinstellelement 7 mit einer Steuersignalerzeugungsschaltung 9 verbunden, welche an ihren Ausgängen Steuersignale S1 und S2 für ein Rechenwerk 8 und eine Kontraststeuerschaltung 6 zur Verfügung stellt. Mittels des Rechenwerkes 8 erfolgt die Feineinstellung des Kontrastes und mittels der Kontraststeuerschaltung 6 die Grobeinstellung des Kontrastes.

Die Steuersignalerzeugungsschaltung 9 wertet die Dauer der Betätigung des Kontrasteinstellelementes 7 und/oder dessen Winkelverstellung aus und erzeugt daraus die genannten Steuersignale S1 und S2 für das Rechenwerk 8 und die Kontraststeuerschaltung 6, um die gewünschte Kontraständerung zu bewirken.

Beispielsweise wird zu einer minimalen Kontraständerung lediglich dem Rechenwerk 8 ein Steuersignal S1 zugeführt, während in der Kontraststeuerschaltung 6 keine Kontraständerung vorgenommen wird.

Die Kontraststeuerschaltung 6 arbeitet so, wie es oben im Zusammenhang mit der Figur 2 beschrieben wurde. Das Rechenwerk 8 ist zwischen dem Analog-Digital-Wandler 3 und der Schaltung 4 zur Erzeugung einer vom digitalen Signalwert abhängigen Anzahl der Spannungsimpulse angeordnet. Dem Rechenwerk 8 werden vom Ausgang des Analog-Digital-Wandlers 3 digitale Signale zugeführt, die beispielsweise in einem hexadezimalen Wertebereich von 00 bis FF liegen. Soll mittels des Rechenwerkes 8 keine feine Kontrasteinstellung erfolgen, dann stellt das Rechenwerk an seinem Ausgang die ihm zugeführten digitalen Signale mit unverändertem Wertebereich zur Verfügung. Ergibt hingegen eine Betätigung des Kontrasteintellelementes 7, daß eine Kontrastfeineinstellung notwendig ist, dann stellt das Rechenwerk 8 an seinem Ausgang digitale Signale mit einem veränderten Wertebereich zur Verfügung.

Vorstehend wurde die Erfindung anhand eines DC-Plasmadisplays beschrieben, bei welchem eine Ansteuerung mittels insbesondere digitaler Spannungsimpulse erfolgt. Die Erfindung kann selbstverständlich sowohl für DC als auch bei AC-Plasmadisplays verwendet werden, bei welchen eine Ansteuerung mit Wechselstrom erfolgen kann.

## Patentansprüche

1. Verfahren zur Kontrasteinstellung bei impulsbreitengesteuerten Bildanzeigen, bei welchem: ein analoges Bildsignal durch einem Analog-Digital-Wandler (3) in ein digitales Helligkeitssignal gewandelt wird; das zur Bilddarstellung zur Verfügung stehende Zeitintervall in mehrere zeitliche aufeinanderfolgende Teilzeitintervalle aufgeteilt wird; das einem Bildpunkt zugeordnete digitale Helligkeitssignal in eine vorgegebene Anzahl von Spannungsimpulsen umgewandelt wird, die während eines oder mehrerer Teilzeitintervalle vorliegen, wobei zu einer Kontraständerung die vorgegebene Anzahl der in jedem der Teilzeitintervalle erzeugbaren Spannungsimpulse geändert wird, sodass bei vorgenommener Kontrastreduzierung der Arbeitsbereich des Analog-Digital-Wandlers beinahe voll und optimal ausgenutzt wird; die vorgegebene Anzahl der in jedem der Teilzeitintervalle erzeugbaren Spannungsimpulse unterschiedlich ist; und die vorgegebene Anzahl der Spannungsimpulse in jedem der Teilzeitintervalle einem ganzzahligen Vielfachen der Anzahl der Spannungsimpulse im kürzesten der Teilzeitintervalle entspricht; und zur Kontraständerung zusätzlich entweder das analoge Helligkeitssignal über ein mit einem Kontrasteinstellelement verbundenes analoges Netzwerk, insbesondere ein Widerstandsnetzwerk geführt wird, oder das analog-digital-gewandelte Helligkeitssignal über ein zur Veränderung des Wertebereichs des analog-digital-gewandelten Helligkeitssignals vorgesehenes Rechenwerk geführt wird.

2. Vorrichtung zur Kontrasteinstellung bei impulsbreitengesteuerten Bildanzeigen mit
- einem Eingangsanschluß (1) für ein analoges Bildsignal,
- einem Analog-Digital-Wandler (3) zur Umwandlung des analogen Bildsignals in ein digitales Bildsignal,
- einer mit dem Analog-Digital-Wandler (3) verbundenen Schaltung (4) zur Erzeugung einer vorgegebenen Anzahl von Spannungsimpulsen während eines oder mehrerer Teilzeitintervalle eines für eine Bilddarstellung zur Verfügung stehenden Zeitintervalls;
- einer mit einem Kontrasteinstellelement (7) verbundenen Kontraststeuerschaltung (6) zur Veränderung der Anzahl der in jedem der Teilzeitintervalle erzeugbaren Spannungsimpulse, sodass bei vorgenommener Kontrastreduzierung der Arbeitsbereich des Analog-Digital-Wandlers (3) voll und optimal ausgenutzt werden kann; wobei die Kontraststeuerschaltung (6) über eine Steuersignalerzeugungsschaltung (9) mit dem Kontrasteinstellelement (7) verbunden ist; und weiters entweder
- ein zwischen dem Analog-Digital-Wandler (3) und der Schaltung (4) zur Erzeugung einer vorgegebenen Anzahl von Spannungsimpulsen angeordnetes Rechenwerk (8) zur Veränderung des Wertebereichs des am Ausgang des Analog-Digital-Wandlers (3) zur Verfügung gestellten digitalen Signals vorgesehen ist und die Steuersignalerzeugungsschaltung (9) zusätzlich zur Erzeugung eines Steuersignals (S1) für das Rechenwerk (8) vorgesehen ist, oder
- ein mit dem Eingangsanschluß (1) verbundenes analoges Netzwerk, insbesondere ein Widerstandsnetzwerk (2b), welches ausgangsseitiges mit dem Analog-Digital-Wandler (3) verbunden ist, und mit einem weiteren Kontrasteinstellelement (2a) zur Veränderung des analogen Netzwerkes, insbesondere zur Veränderung des Widerstandswertes des Widerstandsnetzwerks (2), verbunden ist.

## Claims

1. Method of adjusting contrast in pulse-width-controlled picture displays in which: an analog picture signal is converted by an analog/digital converter (3) into a digital brightness signal; the time interval available for picture display is divided up into a plurality of temporally consecutive component time intervals; the digital brightness signal assigned to one pixel is converted into a specified number of voltage pulses that are available during one or more component time intervals, wherein, for the purpose of a contrast change, the specified number of the voltage pulses that can be generated in each of the component time intervals is changed so that, if a contrast reduction is made, the working range of the analog/digital converter is virtually completely and optimally utilized; the specified number of voltage pulses that can be generated in each of the component time intervals is different; and the specified number of voltage pulses in each of the component time intervals corresponds to an integral multiple of the number of voltage pulses in the shortest of the component time intervals; and, additionally, for the purpose of contrast change, either the analog brightness signal is fed via an analog network connected to a contrast adjustment element, in particular a resistor network, or the analog/digital-converted brightness signal is fed via an arithmetic unit provided for altering the value range of the analog/digital-converted brightness signal.

2. Device for contrast adjustment in pulse-width-controlled picture displays having
- an input connection (1) for an analog picture signal,
- an analog/digital converter (3) for converting the analog picture signal into a digital picture signal,
- a circuit (4) connected to the analog/digital converter (3) for generating a specified number of voltage pulses during one or more component time intervals of a time interval available for a picture display;
- a contrast control circuit (6) connected to a contrast adjustment element (7), for altering the number of voltage pulses that can be generated in each of the component time intervals so that, if a contrast reduction is made, the working range of the analog/digital converter (3) can be fully and optimally utilized; wherein the contrast control circuit (6) is connected via a control-signal-generating circuit (9) to the contrast adjustment element (7); and furthermore, either
- an arithmetic unit (8) disposed between the analog/digital converter (3) and the circuit (4) for generating a specified number of voltage pulses is provided for altering the value range of the digital signal made available at the output of the analog/digital converter (3), and the control-signal-generating circuit (9) is additionally provided for generating a control signal (S1) for the arithmetic unit (8), or
- an analog network connected to the input connection (1), in particular a resistor network (2b) that is connected on the output side to the analog/digital converter (3) and is connected to a further contrast adjustment element (2a) for altering the analog network, in particular for altering the resistance value of the resistor network (2).

## Revendications

1. Procédé de réglage du contraste pour des affichages d'image commandés par sous-trames pour lesquels: un signal image analogique sera transformé en signal de luminance numérique par un transformateur analogique-numérique (3); l'intervalle de temps disponible pour représenter l'image est divisé en plusieurs intervalles de temps partiel se succédant chronologiquement les uns aux autres; un signal de luminance numérique affecté à un point d'image est transformé en un nombre donné d'impulsions de tension qui sont présentes durant un ou plusieurs intervalles de temps partiel, le nombre prédéterminé des impulsions de tension pouvant être générées dans chacun des intervalles de temps partiel pour une modification du contraste étant modifié de sorte que lors de la réduction du contraste la gamme des valeurs du transformateur analogique-numérique soit exploitée presque complètement et de façon optimale; le nombre prédéterminé d'impulsions de tension pouvant être généré dans chacun des intervalles de temps partiel est différent; et le nombre prédéterminé d'impulsions de tension dans chacun des intervalles de temps partiel correspond à un multiple entier du nombre d'impulsions de tension dans l'intervalles de temps partiel le plus court; et en plus pour procéder à la modification du contraste, soit on amène le signal de luminance analogique par l'intermédiaire d'un réseau analogique relié à un élément de réglage du contraste, en particulier un réseau de résistance soit on amène le signal de luminance numérisé par l'intermédiaire de l'organe de calcul prévu pour modifier la gamme de valeurs du signal de luminance numérisé.

2. Dispositif de réglage du contraste pour des affichages d'image commandés sous trames avec
- un raccord d'entrée (1) pour un signal image analogique,
- un transformateur analogique-numérique (3) pour convertir le signal image analogique en signal image numérique,
- un circuit (4) relié au transformateur analogique-numérique (3) pour générer un nombre prédéterminé d'impulsions de tension durant un ou plusieurs intervalles de temps partiel d'un intervalle de temps disponible pour une représentation d'image;
- un circuit de commande de contraste (6) relié à un élément de réglage du contraste (7) pour modifier le nombre d'impulsions de tension pouvant être générées dans chacun des intervalles de temps partiel de sorte que l'on pourra exploiter complètement et de façon optimale la zone opératoire du transformateur analogique-numérique (3), le circuit de commande du contraste (6) étant relié à l'élément de réglage du contraste (7) par l'intermédiaire du circuit de génération du signal de commande (9); et en outre soit
- un organe de calcul (8) disposé entre le transformateur analogique-numérique (3) et le circuit (4) pour générer un nombre prédéterminé d'impulsions de tension est prévu pour modifier la gamme de valeurs du signal numérique mis à disposition à la sortie du transformateur analogique-numérique (3) et le circuit de génération du signal de commande (9) est prévu en plus pour générer un signal de commande (S1) pour l'organe de calcul (8), soit
- un réseau analogique relié avec le raccord d'entrée (1), en particulier un réseau de résistance (2b) qui est relié du côté sortie à un transformateur analogique-numérique (3), et est relié à un autre élément de commande du contraste (2a) pour modifier le réseau analogique, en particulier pour modifier la valeur de la résistance du réseau de résistance (2).
